# EUROPEAN PATENT SPECIFICATION

(11) **EP 0 516 238 B1**
(45) Date of publication and mention of the grant of the patent: **15.04.1998**
(21) Application number: 92201507.8
(22) Date of filing: 26.05.1992
(51) Int. Cl.: C08G 67/02

(54) **Catalyst compositions and a process suitable for the preparation of polymers of carbon monoxide and olefinically unsaturated compounds**
Katalysatorzusammensetzungen und Verfahren zur Herstellung von Polymeren aus Kohlenmonoxyd und olefinisch ungesättigten Verbindungen
Compositions catalytique et procédé de préparation de polymères à partir de monoxyde de carbone et de composés oléfiniquement insaturés

(30) Priority: 31.05.1991 NL 9100940
(43) Date of publication of application: 02.12.1992
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 376 364
- EP-A- 0 390 237

## Description

The invention relates to catalyst compositions and to a process suitable for the preparation of polymers of carbon monoxide with one or more olefinically unsaturated compounds.

Linear alternating polymers of carbon monoxide with one or more α-olefins, i.e. linear polymers in which the units originating in carbon monoxide and the units originating in the α-olefins are present in a substantially alternating order, can be prepared by contacting the monomers with a catalyst composition comprising a Group VIII metal and a phosphorus bidentate ligand of the general formula (R¹)₂P-R-P(R¹)₂ in which R¹ represents an aromatic hydrocarbyl group and R a divalent organic bridging group connecting the two phosphorus atoms and containing in the bridge 2-4 atoms, of which at least 2 are carbon atoms. The above-mentioned catalyst compositions have proved extremely suitable both for the preparation of linear alternating copolymers of carbon monoxide with one α-olefin such as ethene or propene and for the preparation of linear terpolymers of carbon monoxide with two α-olefins such as ethene and propene. The catalyst compositions exhibit a high polymerization rate in this polymerization.

The applicant has recently carried out an investigation in order to find out in how far the above-mentioned catalyst compositions are eligible for the preparation of linear alternating polymers of carbon monoxide with cyclopentene and/or with one or more cyclopentenes carrying an alkyl substituent on the 3-, 4- and/or 5-position, cf. EP-A-390237. It was found that the above-mentioned catalyst compositions could not be used as such for this purpose. No or almost no polymerization was achieved using the catalyst compositions. It was found, however, that they can be made suitable for the preparation of linear alternating polymers of carbon monoxide with one or more optionally 3-, 4- and/or 5-alkyl-substituted cyclopentenes by replacing the phosphorus bidentate ligand of the general formula (R¹)₂P-R-P(R¹)₂ by a phosphorus bidentate ligand of the general formula (C₄H₉)₂P-R-P(C₄H₉)₂. A drawback of these catalyst compositions, however, is that they possess only a relatively low polymerization activity. Attempts to improve the polymerization activity by replacing in the catalyst compositions the phosphorus bidentate ligand of the general formula (C₄H₉)₂P-R-P(C₄H₉)₂ by a closely related phosphorus bidentate ligand of the general formula (CH₃)₂P-R-P(CH₃)₂ were unsuccessful. Substantially no polymerization was obtained using the last-mentioned catalyst compositions.

Continued research into this subject has now surprisingly indicated that catalyst compositions on the basis of a Group VIII metal and a phosphorus bidentate ligand can display a high activity in the preparation of linear alternating polymers of carbon monoxide with one or more optionally 3-, 4- and/or 5-alkyl-substituted cyclopentenes when as the phosphorus bidentate ligand a compound of the general formula (R²)₂P-R-P(R²)₂ in which the groups R² are ethyl and/or 1-propyl groups is used in the catalyst compositions. During the research it was further found that the increase in activity which was observed in the preparation of linear alternating polymers of carbon monoxide with one or more optionally 3-, 4- and/or 5-alkyl-substituted cyclopentenes can also be obtained if in the preparation of linear alternating polymers of carbon monoxide with one or more α-olefins using a catalyst composition comprising a Group VIII metal and a phosphorus bidentate ligand of the general formula (C₄H₉)₂P-R-P(C₄H₉)₂ the last mentioned compound is replaced by a compound of the general formula (R²)₂P-R-P(R²)₂. It was finally found in the investigation that the catalyst compositions comprising a Group VIII metal and a phosphorus bidentate ligand of the general formula (R²)₂P-R-P(R²)₂ can also be very suitable for the preparation of linear alternating polymers of carbon monoxide with other olefinically unsaturated compounds such as olefinically unsaturated bicyclic compounds, which compounds comprise a cyclohexane ring, of which carbon atoms 1 and 4 are linked to each other by an oxygen or carbon atom, carbon atoms 5 and 6 are linked to each other by a double bond and carbon atoms 2 and/or 3 may carry a substituent. Catalyst compositions comprising a Group VIII metal and a phosphorus bidentate ligand of the general formula (R²)₂P-R-P(R²)₂ are novel.

The present patent application therefore relates to novel catalyst compositions comprising a Group VIII metal and a phosphorus bidentate ligand of the general formula (R²)₂P-R-P(R²)₂ in which the groups R² are independently ethyl and/or 1-propyl groups, and R represents a divalent organic bridging group connecting the two phosphorus atoms and containing in the bridge 2-4 atoms, of which at least 2 are carbon atoms. The patent application further relates to a process for the preparation of linear alternating polymers of carbon monoxide with one or more olefinically unsaturated compounds, by contacting the monomers with a catalyst composition according to the invention.

In this patent application, Group VIII metals are understood to be the noble metals ruthenium, rhodium, palladium, osmium, iridium and platinum, as well as the iron group metals iron, cobalt and nickel. In the catalyst compositions of the invention the Group VIII metal is preferably selected from palladium, nickel and cobalt. Palladium is particularly preferred as the Group VIII metal. The incorporation of the Group VIII metal in the catalyst compositions preferably takes place in the form of a salt of a carboxylic acid, in particular in the form of an acetate.

In the phosphorus bidentate ligands of the general formula (R²)₂P-R-P(R²)₂ the groups R² are independently ethyl and/or 1-propyl groups, and R represents a divalent organic bridging group connecting the two phosphorus atoms and containing in the bridge 2-4 atoms, of which at least 2 are carbon atoms. Preferably the groups R² are the same and more preferably the groups R² are ethyl groups. Examples of suitable bridging groups R are the -CH₂-CH₂-group, the -CH₂-CH₂-CH₂- group, the -CH₂-C(CH₃)₂-CH₂- group, the -CH₂-Si(CH₃)₂-CH₂- group and the CH₂-CH₂-CH₂-CH₂- group. There is preference for phosphorus bidentate ligands in which the bridge contains 3 or 4 atoms. There is particular preference for the use of 1,3-bis(diethylphosphino)propane or 1,4-bis(diethylphosphino)butane as the phosphorus bidentate ligand. In the catalyst compositions the phosphorus bidentate ligands are preferably used in a quantity of 0.5-2 and in particular 0.75-1.5 mol per gram atom Group VIII metal.

Besides a Group VIII metal and a phosphorus bidentate ligand, the catalyst compositions of the invention preferably further comprise an anion of an acid with a pKa of less than 4 and in particular an anion of an acid with a pKa of less than 2. Examples of acids with a pKa of less than 2 are mineral acids, sulphonic acids and halocarboxylic acids. A sulphonic acid such as para-toluenesulphonic acid or trifluoromethanesulphonic acid is preferred. The anion of an acid with a pKa of less than 4 can be incorporated into the catalyst compositions in the form of an acid and/or in the form of a salt. As salt, nickel perchlorate is very suitable. The anion is preferably present in the catalyst compositions in a quantity of 1-100 and in particular 2-50 mol per gram atom Group VIII metal.

In addition to a Group VIII metal, a phosphorus bidentate ligand and optionally an anion of an acid with a pKa of less than 4, the catalyst compositions of the invention further preferably contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. There is preference for 1,4-quinones and in particular 1,4-benzoquinone and 1,4-naphthoquinone. The organic oxidizing agent is preferably present in the catalyst compositions in a quantity of 5-5000 and in particular 10-1000 mol per gram atom Group VIII metal.

The catalyst compositions of the invention are in general suitable for use in the preparation of linear alternating polymers of carbon monoxide with one or more olefinically unsaturated compounds. As olefinically unsaturated compounds, compounds are eligible which consist exclusively of carbon and hydrogen, as well as compounds which in addition to carbon and hydrogen contain one or more heteroatoms. The catalyst compositions of the invention are particularly important for the preparation of polymers of carbon monoxide with one or more optionally 3-, 4- and/or 5-alkyl-substituted cyclopentenes. If in the preparation of the polymers use is made of alkyl-substituted cyclopentenes, the alkyl groups present therein preferably contain not more than 4 carbon atoms. An example of a suitable dialkylcyclopentene is 3,5-dimethylcyclopentene. If alkyl-substituted cyclopentenes are used, there is further preference for cyclopentenes containing only one alkyl group, such as 3-methylcyclopentene. There is further preference for polymers of carbon monoxide with only one optionally alkyl-substituted cyclopentene. There is particular preference for copolymers of carbon monoxide with cyclopentene.

The catalyst compositions of the invention are further very suitable for the preparation of polymers of carbon monoxide with one or more α-olefins. Using the catalyst compositions of the invention, very favourable results were achieved in the preparation of copolymers of carbon monoxide with ethene and in the preparation of copolymers of carbon monoxide with 1-octene.

The catalyst compositions of the invention are finally very suitable for the preparation of polymers of carbon monoxide with one or more olefinically unsaturated bicyclic compounds, which compounds comprise a cyclohexane ring of which carbon atoms 1 and 4 are linked to each other by an oxygen or carbon atom, carbon atoms 5 and 6 are linked to each other by a double bond and carbon atoms 2 and/or 3 may carry a substituent. If in these monomers the carbon atoms 1 and 4 are linked to each other by an oxygen atom, they can be described as 1,4-endoxo-5-cyclohexene and derivatives. If in the monomers the carbon atoms 1 and 4 are linked to each other by a carbon atom which carries only two hydrogen atoms, they can be described as norbornene and derivatives. If desired, the carbon atom that provides the link between the carbon atoms 1 and 4 of the cyclohexane can carry one or two hydrocarbyl substituents. If the carbon atom in question carries two methyl groups, the monomers can be described as bornene and derivatives. In the monomers the carbon atoms 2 and/or 3 may carry a substituent such as a hydrocarbyl group or an oxygen-containing group. Examples of suitable olefinically unsaturated bicyclic compounds which are eligible to be polymerized with carbon monoxide with the aid of the catalyst compositions of the invention are bornene, norbornene, 3-methyl-norbornene-2-carboxylic acid, norbornene-2,3-dicarboxylic acid, norbornene-2,3-dicarboxylic anhydride, 2-(hydroxymethyl)norbornene, 1,4-endoxo-5-cyclohexene and 1,4-endoxo-5-cyclohexene-2,3-dicarboxylic anhydride. An example of a suitable diolefinically unsaturated bicyclic compound is dicyclopentadiene. This compound can be considered as a derivative of norbornene in which both the second and the third carbon atom of the cyclohexane ring carries a hydrocarbon substituent and which hydrocarbon substituents together form a -CH=CH-CH₂- group. Using the catalyst compositions of the invention, very favourable results were achieved in the preparation of copolymers of carbon monoxide with norbornene and in the preparation of copolymers of carbon monoxide with norbornene-2,3-dicarboxylic anhydride.

The preparation of the polymers is preferably carried out by contacting the monomers with a solution of the catalyst composition in a diluent in which the polymers are insoluble or virtually insoluble. Lower aliphatic alcohols and in particular methanol are very suitable as diluents. If desired, the polymerization can also be carried out in the gas phase. The polymer preparation can take place either batchwise or continuously.

The quantity of catalyst composition used in the preparation of the polymers may vary within wide limits. Per mol olefinically unsaturated compound to be polymerized a quantity of catalyst composition is preferably used which contains 10⁻⁷ to 10⁻³ and in particular 10⁻⁶ to 10⁻⁴ gram atom Group VIII metal.

The preparation of the polymers is preferably carried out at a temperature of 20-150 °C and a pressure of 2-150 bar and in particular at a temperature of 30-130 °C and a pressure of 5-100 bar. The molar ratio of the olefinically unsaturated compounds relative to carbon monoxide is preferably 10:1 to 1:10 and in particular 5:1 to 1:5.

The invention will now be illustrated with reference to the following examples.

### Example 1

A carbon monoxide/cyclopentene copolymer was prepared as follows. A stirred autoclave with a volume of 250 ml was charged with 50 ml tetrahydrofuran, 20 ml cyclopentene and a catalyst composition consisting of:
2 ml methanol,
0.25 mmol palladium acetate,
0.5 mmol nickel perchlorate,
0.3 mmol 1,3-bis(di-n-butylphosphino)propane, and
10 mmol 1,4-naphthoquinone.

After forcing in carbon monoxide to a pressure of 40 bar the autoclave contents were brought to 40 °C. After 16 hours the polymerization was terminated by cooling to room temperature and releasing the pressure. The reaction mixture was mixed with methanol under stirring and the copolymer was filtered off, washed with methanol and dried. 3.9 g copolymer was obtained. The polymerization rate was 10 g copolymer/(g palladium.hour).

### Example 2

A carbon monoxide/cyclopentene copolymer was prepared in substantially the same way as in example 1, but with the following differences:
a) the catalyst composition contained 0.3 mmol 1,3-bis(diethylphosphino)propane instead of 1,3-bis(di-n-butylphosphino)propane, and
b) the reaction time was 6 hours instead of 16 hours.

13.3 g copolymer was obtained. The polymerization rate was 90 g copolymer/(g palladium.hour).

### Example 3

Example 2 was substantially repeated, but with the difference that the catalyst solution contained 0.3 mmol
1,3-bis(dimethylphosphino)propane instead of
1,3-bis(diethylphosphino)propane.

No polymer was formed.

### Example 4

A stirred autoclave with a volume of 250 ml was charged with 30 ml cyclopentene, 30 ml methanol and a catalyst composition consisting of:
0.1 mmol palladium acetate,
0.1 mmol para-toluenesulphonic acid,
0.15 mmol 1,3-bis(diphenylphosphino)propane, and
40 mmol 1,4-benzoquinone.
After forcing in carbon monoxide to a pressure of 40 bar the autoclave contents were brought to 70 °C. After 5 hours the reaction mixture was cooled to room temperature and the pressure was released. No polymer was obtained.

### Example 5

A carbon monoxide/1-octene copolymer was prepared as follows. A stirred autoclave with a volume of 250 ml was charged with 100 ml tetrahydrofuran, 40 ml 1-octene and a catalyst solution consisting of:
5 ml methanol,
0.1 mmol palladium acetate,
0.5 mmol nickel perchlorate,
0.12 mmol 1,3-bis(di-n-butylphosphino)propane, and
5 mmol 1,4-naphthoquinone.

After forcing in carbon monoxide to a pressure of 40 bar the autoclave contents were brought to 40 °C. After 15 hours the polymerization was terminated by cooling to room temperature and releasing the pressure. The reaction mixture was mixed with acetone under stirring and the copolymer was filtered off, washed with acetone and dried. 25 g copolymer was obtained. The polymerization rate was 167 g copolymer/(g palladium.hour).

### Example 6

A carbon monoxide/1-octene copolymer was prepared in substantially the same way as in example 5, but with the following differences:
a) the catalyst solution contained 0.12 mmol 1,3-bis(diethylphosphino)propane instead of 1,3-bis(di-n-butylphosphino)propane, and
b) the reaction time was 6 hours instead of 15 hours.

37.5 g copolymer was obtained. The polymerization rate was 625 g copolymer/(g palladium.hour).

### Example 7

A carbon monoxide/ethene copolymer was prepared as follows. A stirred autoclave with a volume of 250 ml was charged with a catalyst solution consisting of:
50 ml methanol,
0.25 mmol palladium acetate,
0.5 mmol trifluoromethanesulphonic acid, and
0.3 mmol 1,3-bis(di-n-butylphosphino)propane.

After forcing in 20 bar ethene and 30 bar carbon monoxide, the autoclave contents were maintained at room temperature for 10 hours. The polymerization was terminated by releasing the pressure. The copolymer was filtered off, washed with methanol and dried. 6.25 g copolymer was obtained. The polymerization rate was 25 g copolymer/(g palladium.hour).

### Example 8

A carbon monoxide/ethene copolymer was prepared in substantially the same way as in example 7, but with the following differences:
a) the catalyst solution contained 0.3 mmol 1,3-bis(diethylphosphino)propane instead of 1,3-bis(di-n-butylphosphino)propane, and
b) the reaction time was 3 hours instead of 10 hours.

15 g copolymer was obtained. The polymerization rate was 200 g copolymer/(g palladium.hour).

### Example 9

A carbon monoxide/ethene copolymer was prepared as follows. A stirred autoclave with a volume of 250 ml was charged with a catalyst solution consisting of:
50 ml methanol,
0.1 mmol palladium acetate,
1.0 mmol trifluoromethanesulphonic acid, and
0.12 mmol 1,3-bis(diethylphosphino)propane.

After forcing in 20 bar ethene and 30 bar carbon monoxide, the autoclave contents were brought to 50 °C. After 5 hours the polymerization was terminated by cooling to room temperature and releasing the pressure. The copolymer was filtered off, washed with methanol and dried. 13 g copolymer was obtained. The polymerization rate was 245 g copolymer/(g palladium.hour).

### Example 10

A carbon monoxide/ethene copolymer was prepared in substantially the same way as in example 9, but with the differences that the catalyst solution contained 0.12 mmol 1,4-bis(diethylphosphino)butane instead of 1,3-bis(diethylphosphino)propane.

15 g copolymer was obtained. The polymerization rate was 283 g copolymer/(g palladium.hour).

### Example 11

A carbon monoxide/ethene copolymer was prepared in substantially the same way as in example 7, but with the following differences:
a) the catalyst solution contained 0.3 mmol 1,3-bis(diphenylphosphino)propane instead of 1,3-bis(di-n-butylphosphino)propane, and
b) the reaction time was 5 hours instead of 10 hours.

4 g copolymer was obtained. The polymerization rate was 30 g copolymer/(g palladium.hour).

### Example 12

A carbon monoxide/norbornene copolymer was prepared as follows. A stirred autoclave with a volume of 250 ml was charged with a catalyst solution consisting of:
15 ml methanol,
45 ml tetrahydrofuran,
0.25 mmol palladium acetate,
0.5 mmol nickel perchlorate,
0.3 mmol 1,3-bis(diethylphosphino)propane, and
5 mmol 1,4-naphthoquinone.

After introducing 20 ml norbornene into the autoclave and forcing in 40 bar carbon monoxide, the autoclave contents were brought to 60 °C. After 10 hours the polymerization was terminated by cooling to room temperature and releasing the pressure. The formed polymer was filtered off, washed with methanol and dried. 13 g copolymer was obtained. The polymerization rate was 52 g copolymer/(g palladium.hour).

### Example 13

A carbon monoxide/norbornene-2,3-dicarboxylic acid anhydride copolymer was prepared as follows. A stirred autoclave with a volume of 250 ml was charged with a catalyst solution consisting of:
50 ml methanol,
0.25 mmol palladium acetate,
1.0 mmol trifluoroacetic acid,
0.3 mmol 1,3-bis(diethylphosphino)propane.

After introducing 10 g norbornene-2,3-dicarboxylic acid anhydride into the autoclave, 30 bar carbon monoxide and 15 bar ethene were forced in. The autoclave contents were then brought to 75 °C. After 6 hours the polymerization was terminated by cooling to room temperature and releasing the pressure. The formed copolymer was filtered off, washed with methanol and dried. 10 g copolymer was obtained. The polymerization rate was 70 g copolymer/(g palladium.hour).

Of the examples 1-13, examples 2, 6, 8, 9, 10, 12 and 13 are according to the invention. In these examples use was made of a catalyst composition according to the invention which comprised a Group VIII metal and a phosphorus bidentate ligand of the general formula (R²)₂P-R-P(R²)₂. Examples 1, 3-5, 7 and 11 fall outside the scope of the invention and have been included in the patent application for comparison.

The superior performance of catalyst compositions of the invention which contain a phosphorus bidentate ligand of the general formula (R²)₂P-R-P(R²)₂ in comparison with corresponding catalyst compositions but containing a phosphorus bidentate ligand of the general formula (C₄H₉)₂P-R-P(C₄H₉)₂ can clearly be seen by comparison of the polymerization rates achieved using both types of catalyst compositions in the polymerization of carbon monoxide with the following monomers.

Cyclopentene (example 2: 90 g/(g.hour) versus example 1: 10 g/(g.hour).

1-Octene (example 6: 625 g/(g.hour) versus example 5: 167 g/(g.hour).

Ethene (example 8: 200 g/(g.hour) versus example 7: 25 g/(g.hour).

Examples 12 and 13 demonstrate that the catalyst compositions of the invention can also be very suitable for the preparation of copolymers of carbon monoxide with norbornene or compounds derived therefrom.

It was established by ¹³C-NMR analysis that the copolymers prepared according to examples 1, 2 and 5-13 possessed a linear structure and that the units from carbon monoxide and the units from the employed olefinically unsaturated monomers occurred therein in an alternating arrangement. In the copolymers prepared according to example 13, a part of the carboxylic acid anhydride groups occurred as methyl ester groups.

## Claims

1. Catalyst compositions, containing a Group VIII metal and a phosphorus bidentate ligand of the general formula (R²)₂P-R-P(R²)₂ in which the groups R² are independently ethyl and/or 1-propyl groups, and R represents a divalent organic bridging group connecting the two phosphorus atoms and containing in the bridge 2-4 atoms, of which at least 2 are carbon atoms.

2. Catalyst compositions according to claim 1, characterized in that they contain palladium as the Group VIII metal.

3. Catalyst compositions according to claim 1 or 2, characterized in that the groups R² of the phosphorus bidentate ligand are ethyl groups.

4. Catalyst compositions according to one or more of claims 1-3, characterized in that they contain a phosphorus bidentate ligand in which the bridge contains 3 or 4 atoms.

5. Catalyst compositions according to claim 4, characterized in that they contain 1,3-bis(diethylphosphino)propane or 1,4-bis(diethylphosphino)butane as the phosphorus bidentate ligand.

6. Catalyst compositions according to one or more of claims 1-5, characterized in that they additionally contain an anion of an acid with a pKa of less than 4.

7. Catalyst compositions according to claim 6, characterized in that they contain the phosphorus bidentate ligand in a quantity of 0.75-1.5 mol per gram atom Group VIII metal and the anion of an acid with a pKa of less than 4 in a quantity of 2-50 mol per gram atom Group VIII metal.

8. Catalyst compositions according to one or more of claims 1-7, characterized in that they additionally contain a 1,4-quinone such as 1,4-benzoquinone or 1,4-naphthoquinone in a quantity of 10-1000 mol per gram atom Group VIII metal.

9. Process for the preparation of polymers, characterized in that linear alternating polymers of carbon monoxide with one or more olefinically unsaturated compounds are prepared by contacting the monomers with a catalyst composition according to one or more of claims 1-8.

10. Process according to claim 9, characterized in that as olefinically unsaturated compounds one or more optionally 3-, 4-and/or 5-alkyl-substituted cyclopentenes are employed.

11. Process according to claim 10, characterized in that it is applied for the preparation of copolymers of carbon monoxide with cyclopentene.

12. Process according to claim 9, characterized in that as olefinically unsaturated monomers, one or more α-olefins are used, such as ethene or 1-octene.

13. Process according to claim 9, characterized in that as olefinically unsaturated compounds, one or more bicyclic compounds are used, which compounds contain a cyclohexane ring of which carbon atoms 1 and 4 are linked to each other by an oxygen or carbon atom, carbon atoms 5 and 6 are linked to each other by a double bond and carbon atoms 2 and/or 3 may carry a substituent, such as norbornene or norbornene-2,3-dicarboxylic acid anhydride.

14. Process according to one or more of claims 9-13, characterized in that the polymerization is carried out by contacting the monomers with a solution of the catalyst composition in a lower aliphatic alcohol, such as methanol, and in that it is carried out at a temperature of 30-130 °C, a pressure of 5-100 bar and a molar ratio of the olefinically unsaturated compounds relative to carbon monoxide of 5:1-1:5 and using a quantity of catalyst composition which per mol olefinically unsaturated compound to be polymerized contains 10⁻⁶-10⁻⁴ gram atom Group VIII metal.

## Patentansprüche

1. Katalysatorzusammensetzungen mit einem Gehalt an einem Gruppe VIII-Metall und einem Phosphorbidentatliganden der allgemeinen Formel (R²)₂P-R-P(R²)₂, worin die Gruppen R² unabhängig voneinander Ethyl- und/oder 1-Propylgruppen darstellen und R eine zweiwertige organische Brückengruppe bedeutet, die die beiden Phosphoratome verbindet und in der Brücke 2 bis 4 Atome enthält, von denen wenigstens 2 Kohlenstoffatome sind.

2. Katalysatorzusammensetzungen nach Anspruch 1, dadurch gekennzeichnet, daß sie Palladium als das Gruppe VIII-Metall enthalten.

3. Katalysatorzusammensetzungen nach Anspruch 1 oder 2, dadurch gekennzeichnet, daß die Gruppen R² des Phosphorbidentatliganden Ethylgruppen sind.

4. Katalysatorzusammensetzungen nach einem oder mehreren der Ansprüche 1 bis 3, dadurch gekennzeichnet, daß sie einen Phosphorbidentatliganden enthalten, worin die Brücke 3 oder 4 Atome enthält.

5. Katalysatorzusammensetzungen nach Anspruch 4, dadurch gekennzeichnet, daß sie als Phosphorbidentatliganden 1,3-Bis(diethylphosphino)propan oder 1,4-Bis(diethylphosphino)butan enthalten.

6. Katalysatorzusammensetzungen nach einem oder mehreren der Ansprüche 1 bis 5, dadurch gekennzeichnet, daß sie zusätzlich ein Anion einer Säure mit einem pKa-Wert kleiner als 4 enthalten.

7. Katalysatorzusammensetzungen nach Anspruch 6, dadurch gekennzeichnet, daß sie den Phosphorbidentatliganden in einer Menge von 0,75 bis 1,5 Mol je Gramm-Atom Gruppe VIII-Metall und das Anion einer Säure mit einem pKa-Wert von kleiner als 4 in einer Menge von 2 bis 50 Mol je Gramm-Atom Gtuppe VIII-Metall enthalten.

8. Katalysatorzusammensetzungen nach einem oder mehreren der Ansprüche 1 bis 7, dadurch gekennzeichnet, daß sie zusätzlich ein 1,4-Chinon wie 1,4-Benzochinon oder 1,4-Naphthochinon in einer Menge von 10 bis 1.000 Mol je Gramm-Atom Gruppe VIII-Metall enthalten.

9. Verfahren zur Herstellung von Polymeren, dadurch gekennzeichnet, daß lineare alternierende Polymere aus Kohlenmonoxid und einer oder mehreren olefinisch ungesättigten Verbindungen durch Inkontaktbringen der Monomere mit einer Katalysatorzusammensetzung nach einem oder mehreren der Ansprüche 1 bis 8 hergestellt werden.

10. Verfahren nach Anspuch 9, dadurch gekennzeichnet, daß als olefinisch ungesättigte Verbindungen ein oder mehrere, gegebenenfalls 3-, 4-, und/oder 5-alkylsubstituierte Cyclopentene eingesetzt werden.

11. Verfahren nach Anspruch 10, dadurch gekennzeichnet, daß es auf die Herstellung von Copolymeren aus Kohlenmonoxid und Cyclopenten angewendet wird.

12. Verfahren nach Anspruch 9, dadurch gekennzeichnet, daß als olefinisch ungesättigte Monomere ein oder mehrere α-Olefine verwendet werden, wie Ethen oder 1-Okten.

13. Verfahren nach Anspruch 9, dadurch gekennzeichnet, daß als olefinisch ungesättigte Verbindungen eine oder mehrere bicyclische Verbindungen verwendet werden, welche Verbindungen einen Cyclohexanring enthalten, worin die Kohlenstoffatome 1 und 4 durch ein Sauerstoff- oder Kohlenstoffatom miteinander verbunden sind, die Kohlenstoffatome 5 und 6 durch eine Doppelbindung miteinander verbunden sind und die Kohlenstoffatome 2 und/oder 3 einen Substituenten tragen können, wie Norbornen oder Norbornen-2,3-dicarbonsäureanhydrid.

14. Verfahren nach einem oder mehreren der Ansprüche 9 bis 13, dadurch gekennzeichnet, daß die Polymerisation durch Inkontaktbringen der Monomere mit einer Lösung der Katalysatorzusammensetzung in einem niederen aliphatischen Alkohol, wie Methanol, ausgeführt wird, und daß sie bei einer Temperatur von 30 bis 130°C, einem Druck von 5 bis 100 bar und einem Molverhältnis der olefinisch ungesättigten Verbindungen zu Kohlenmonoxid von 5:1 bis 1:5 und unter Anwendung einer Menge an Katalysatorzusammensetzung ausgeführt wird, die je Mol olefinisch ungesättigter, zu polymerisierender Verbindung 10⁻⁶ bis 10⁻⁴ Gramm-Atom Gruppe VIII-Metall enthält.

## Revendications

1. Compositions catalytiques comprenant un métal du groupe VIII et un ligand bidentate du phosphore répondant à la formule générale (R²)₂P-R-P(R²)₂ dans laquelle les symboles R² représentent indépendamment des radicaux éthyle et/ou 1-propyle, et R représente un groupe de pontage organique bivalent reliant les deux atomes de phosphore et contenant dans le pont 2 à 4 atomes, deux d'entre eux au moins étant des atomes de carbone.

2. Compositions catalytiques suivant la revendication 1, caractérisées en ce qu'elles contiennent du palladium à titre de métal du groupe VIII.

3. Compositions catalytiques suivant la revendication 1 ou 2, caractérisées en ce que les groupes R² du ligand bidentate du phosphore sont des radicaux éthyle.

4. Compositions catalytiques suivant une ou plusieurs des revendications 1 à 3, caractérisées en ce qu'elles contiennent un ligand bidentate du phosphore dans lequel le pont contient 3 ou 4 atomes.

5. Compositions catalytiques suivant la revendication 4, caractérisées en ce qu'elles contiennent du 1,3-bis-(diéthylphosphino)-propane ou du 1,4-bis-(diéthylphosphino)-butane à titre de ligand bidentate du phosphore.

6. Compositions catalytiques suivant une ou plusieurs des revendications 1 à 5, caractérisées en ce qu'elles contiennent, en outre, un anion d'un acide qui possède un pKa inférieur à 4.

7. Compositions catalytiques suivant la revendication 6, caractérisées en ce qu'elles contiennent le ligand bidentate du phosphore en une proportion de 0,75 à 1,5 mole par atome-gramme de métal du groupe VIII et l'anion d'un acide qui possède un pKa inférieur à 4 en une proportion de 2 à 50 moles par atome-gramme de métal du groupe VIII.

8. Compositions catalytiques suivant une ou plusieurs des revendications 1 à 7, caractérisées en ce qu'elles contiennent, en outre, une 1,4-quinone, comme la 1,4-benzoquinone ou la 1,4-naphtoquinone, en une proportion qui varie de 10 à 1000 moles par atome-gramme de métal du groupe VIII.

9. Procédé de préparation de polymères, caractérisé en ce que l'on prépare des polymères alternants et linéaires du monoxyde de carbone et d'un ou plusieurs composés oléfiniquement insaturés par la mise en contact des monomères avec une composition catalytique suivant une ou plusieurs des revendications 1 à 8.

10. Procédé suivant la revendication 9, caractérisé en ce que, à titre de composés oléfiniquement insaturés, on utilise un ou plusieurs cyclopentènes éventuellement 3-, 4- et/ou 5-alkyl-substitués.

11. Procédé suivant la revendication 10, caractérisé en ce qu'on l'applique à la préparation de copolymères du monoxyde de carbone et du cyclopentène.

12. Procédé suivant la revendication 9, caractérisé en ce que, à titre de monomères oléfiniquement insaturés, on utilise une ou plusieurs α-oléfines, comme l'éthène ou le 1-octène.

13. Procédé suivant la revendication 9, caractérisé en ce que, à titre de composés oléfiniquement insaturés, on utilise un ou plusieurs composés bicycliques, lesquels composés contiennent un noyau cyclohexane dont les atomes de carbone 1 et 4 sont mutuellement liés par un atome d'oxygène ou de carbone, les atomes de carbone 5 et 6 sont mutuellement liés par une double liaison et les atomes de carbone 2 et/ou 3 peuvent porter un substituant, comme le norbornène ou l'anhydride norbornène-2,3-dicarboxylique.

14. Procédé suivant une ou plusieurs des revendications 9 à 13, caractérisé en ce que l'on entreprend la polymérisation par la mise en contact des monomères avec une solution de la composition catalytique dans un alcool aliphatique inférieur, comme le méthanol et en ce qu'on l'entreprend à une température de 30 à 130°C, sous une pression de 5 à 100 bars et avec un rapport molaire des composés oléfiniquement insaturés au monoxyde de carbone de 5:1-1:5 et en ce que l'on utilise une proportion de composition catalytique qui, par mole de composé oléfiniquement insaturé à polymériser, contient 10⁻⁶ à 10⁻⁴ atome-gramme de métal du groupe VIII.
